# EUROPÄISCHE PATENTSCHRIFT

(11) **EP 0 692 517 B1**
(45) Veröffentlichungstag und Bekanntmachung des Hinweises auf die Patenterteilung: **18.10.2000**
(21) Anmeldenummer: 95110520.4
(22) Anmeldetag: 06.07.1995
(51) Int. Cl.: C08K 5/00, C09K 11/02, C09D 11/02, C09B 67/20

(54) **Verfahren zur Herstellung vernetzter Polymerteilchen mit Fluoreszenzfarbstoff**
Process for the preparation of crosslinked polymer particles containing fluorescent dyes
Procédé pour la préparation de particules de polymère réticulé contenant un colorant fluorescent

(30) Priorität: 14.07.1994 DE 4424817
(43) Veröffentlichungstag der Anmeldung: 17.01.1996
(73) Patentinhaber: BASF AKTIENGESELLSCHAFT, 67056 Ludwigshafen (DE)
(72) Erfinder: Fischer, Wolfgang, Dr., D-67067 Ludwigshafen (DE); Deckers, Andreas, Dr., D-55234 Flomborn (DE); Güntherberg, Norbert, Dr., D-67346 Speyer (DE); Jahns, Ekkehard, Dr., D-69493 Hirschberg (DE); Haremza, Sylke, Dr., D-69151 Neckargemünd (DE); Ostertag, Werner, Dr., D-67269 Grünstadt (DE); Schmidt, Helmut, D-67574 Osthofen (DE)

(56) Entgegenhaltungen:
- EP-A- 0 422 474
- EP-A- 0 570 782
- EP-A- 0 590 935
- FR-A- 2 119 312

## Beschreibung

Die vorliegende Erfindung betrifft ein Verfahren zur Herstellung von Fluoreszenzpigmenten, enthaltend im wesentlichen eine Polymermatrix auf der Basis von Poly(meth)acrylat und einem unpolaren Fluoreszenzfarbstoff aus der Cumarin- oder Perylenreihe, wobei die Polymermatrix ein durch Suspensionspolymerisation hergestelltes vernetztes Polymethacrylat oder Polyacrylat ist.

Die DE-A 39 33 903 beschreibt Fluoreszenzpigmente, erhältlich durch Mischen einer Polymermatrix auf Basis von u.a. Polymethylmethacrylat mit mindestens einem Fluoreszenzfarbstoff aus der Cumarin- oder Perylenreihe. Die Fluoreszenzpigmente der DE-A 39 33 903 besitzen eine sehr gute Lichtechtheit, jedoch ist für einige Anwendungen eine noch bessere Migrationsechtheit erforderlich.

Der vorliegenden Erfindung lag daher die Bereitstellung weiterer Fluoreszenzpigmente als Aufgabe zugrunde, die sowohl eine sehr gute Lichtechtheit als auch eine sehr gute Migrationsechtheit aufweisen.

Demgemäß wurde ein Verfahren zur Herstellung von Fluoreszenzpigmenten gefunden, bei dem man eine Mischung aus
(A) 69,9 bis 99,8 Gew.-% eines C₁-C₈-Alkylesters der Acryl- oder Methacrylsäure,
(B) 0 bis 29,9 Gew.-% eines copolymerisierbaren, monoethylenisch ungesättigten Monomeren,
(C) 0,1 bis 30,0 Gew.-% eines copolymerisierbaren, polyfunktionellen, vernetzend wirkenden Monomers in Gegenwart von
(D) 0,1 bis 15,0 Gew.-%, bezogen auf die Summe von (A) und (B), eines unpolaren Fluoreszenzfarbstoffes aus der Cumarin- oder Perylenreihe
in Suspension polymerisiert.

Die nach dem erfindungsgemäßen Verfahren erhältlichen Fluoreszenzpigmente enthalten im wesentlichen eine Polymermatrix und einen Fluoreszenzfarbstoff aus der Cumarin- oder Perylenreihe, wobei die Polymermatrix ein in Gegenwart eines Fluoreszenzfarbstoffes durch Suspensionspolymerisation hergestelltes vernetztes Polymethacrylat oder Polyacrylat ist.

Bevorzugt erhält man diese Fluoreszenzpigmente durch Suspensionspolymerisation einer Mischung bestehend im wesentlichen aus
(A) 80 bis 99,7 Gew.-% eines C₁-C₈-Alkylesters der Acryl- oder Methacrylsäure,
(B) 0,1 bis 29,9, besonders bevorzugt von 0,1 bis 20 Gew.-% eines copolymerisierbaren, monoethylenisch ungesättigten Monomeren,
(C) 0,1 bis 20,0 Gew.-% eines copolymerisierbaren, polyfunktionellen, vernetzend wirkenden Monomers, und
(D) 0,1 bis 10,0, besonders bevorzugt 0,5 bis 10,0 Gew.-%, bezogen auf die Summe von (A) und (B), eines unpolaren Fluoreszenzfarbstoffes aus der Cumarin- oder Perylenreihe.

Als C₁-C₈-Alkylester der Methacryl- oder Acrylsäure (Komponente (A))verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten.

Als copolymerisierbare, monoethylenisch ungesättigte Monomere (B) kann man Methacrylsäure, Acrylsäure, C₁-C₈-Hydroxyalkylester der Meth- oder Acrylsäure wie 2-Hydroxyethylacrylat, Acrylnitril, 2-Hydroxypropylmethacrylat, 2-Hydroxypropylacrylat, Dimethylaminoethylmethacrylat, Dimethylaminoethylacrylat, Styrol, bevorzugt 2-Hydroxyethylacrylat, Acrylsäure und Methacrylsäure, oder Mischungen der vorgenannten Monomere (B), einsetzen.

Als copolymerisierbare, polyfunktionelle, vernetzend wirkende Monomere (C) setzt man im allgemeinen an sich bekannte Vernetzer ein, die zwei, drei oder vier, bevorzugt zwei zur Copolymerisation befähigte Doppelbindungen enthalten, die nicht in 1,3-Stellung konjugiert sind. Solche zur Vernetzung geeigneten Monomeren sind beispielsweise Ester, hergestellt aus mehrwertigen Alkoholen und Methacryl- oder Acrylsäure wie Ethylenglykoldimethacrylat, Ethylenglykoldiacrylat, Butandioldimethacrylat, Butandioldiacrylat, oder Allylverbindungen wie Allylmethacrylat, Triallylcyanurat, Divinylbenzol, Diallylmaleat, Diallylfumarat, Diallylphthalat, Hexandioldimethacrylat, Hexandioldiacrylat sowie der Acrylsäureester des Tricyclodecenylalkohols, bevorzugt Butandioldiacrylat, Hexandioldiacrylat, Ethylenglykoldiacrylat und der Acrylsäureester des Tricyclodecenylalkohols.

Als unpolare Fluoreszenzfarbstoffe (D) setzt man erfindungsgemäß solche aus der Cumarin- oder Perylenreihe ein.

Geeignete unpolare Cumarinfarbstoffe sind beispielsweise solche, wie sie in der US-A-3 880 869 beschrieben sind. Hervorzuheben sind dabei Cumarinfarbstoffe der Formel I 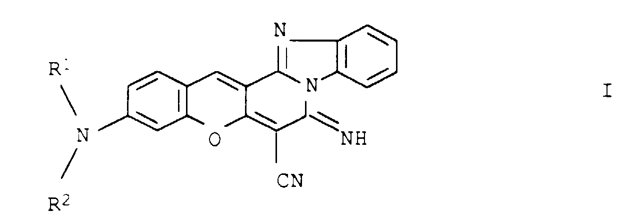 in der R¹ und R² gleich oder verschieden sind und unabhängig voneinander jeweils C₁-C₄-Alkyl, insbesondere Ethyl, bedeuten.

Weiterhin hervorzuheben sind Fluoreszenzpigmente, die Cumarinfarbstoffe der Formel II 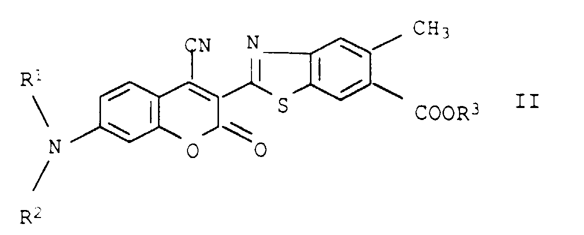 enthalten, wobei
- R³: C₁-C₁₁-Alkyl bedeutet.

Geeignete unpolare Perylenfarbstoffe sind beispielsweise solche, wie sie in der US-A-4 618 694, DE-A-2 451 782, US-A- 379 934, US-A- 4 446 324 oder EP-A-277 980 beschrieben sind.

Weiterhin geeignete unpolare Perylenfarbstoffe sind beispielsweise solche, wie sie in der EP-A-73 007 beschrieben sind.

Hervorzuheben sind Fluoreszenzpigmente, die Perylenfarbstoffe der Formel III 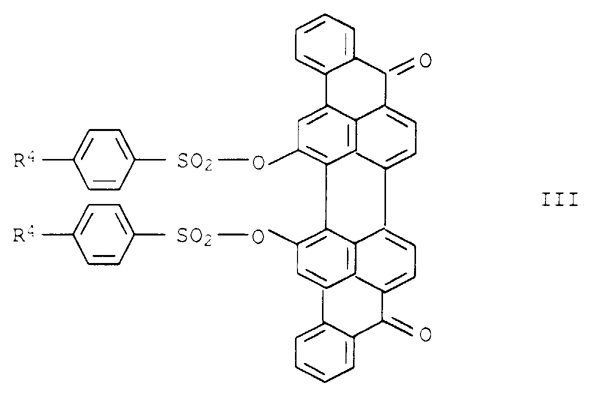 enthalten, wobei R⁴ C₁-C₁₃-Alkyl bedeutet.

Besonders bevorzugt sind Fluoreszenzpigmente, die Perylenfarbstoffe der Formel IV 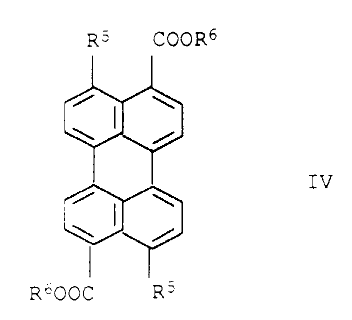 enthalten, wobei
- R⁵: Wasserstoff oder Cyano und
- R⁶: C₁-C₁₁-Alkyl bedeuten.

Weiterhin besonders bevorzugt sind Fluoreszenzpigmente, die Perylenfarbstoffe der Formel V 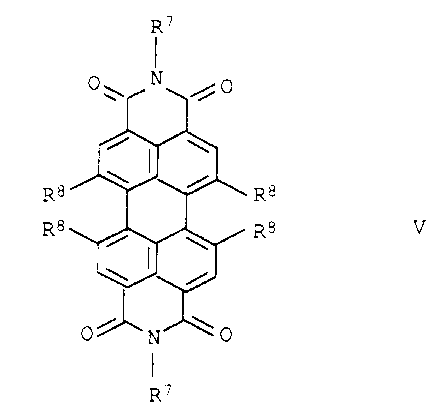 enthalten, wobei
- R⁷: C₅-C₂₀-Alkyl, das gegebenenfalls ein Sauerstoffatom in der Kohlenstoffkette enthalten kann, oder Phenyl, das durch C₁-C₁₃-Alkyl oder C₁-C₁₃-Alkoxy ein- oder mehrfach substituiert ist, und
- R⁸: Wasserstoff, Chlor, Phenoxy oder durch Halogen, C₁-C₄-Alkyl oder C₁-C₄-Alkoxy substituiertes Phenoxy bedeuten.

Insbesondere bevorzugt sind Fluoreszenzpigmente, die Farbstoffe der Formel V enthalten, worin R⁷ durch C₁-C₄-Alkyl oder C₁-C₄-Alkoxy ein- oder mehrfach substituiertes Phenyl und R⁸ Wasserstoff, Phenoxy oder Chlor bedeuten.

Ganz besonders hervorzuheben sind Fluoreszenzpigmente, die einen Farbstoff der Formel IV enthalten, worin R⁵ jeweils Cyano und R⁶ jeweils Butyl bedeuten.

Weiterhin ganz besonders hervorzuheben sind Fluoreszenzpigmente, die einen Farbstoff der Formel V enthalten, worin R⁷ 2,6-Diisopropylphenyl und R⁸ Phenoxy bedeuten.

Geeignete Reste R⁶, R¹, R², R³ und R⁴ sind z.B. Methyl, Ethyl, Propyl, Isopropyl, Butyl, Isobutyl oder sec.-Butyl.

Reste R⁶, R³ und R⁴ sind weiterhin, wie auch Reste R⁷, z.B. Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl oder Undecyl.

Reste R⁷ und R⁴ sind weiterhin z.B. Dodecyl, Tridecyl oder Isotridecyl.

Reste R⁷ sind weiterhin z.B. Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.), 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxy-propyl, 2- oder 3-Butoxypropyl, 2- oder 3-(2-Ethylhexyloxy)propyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2- oder 4-(2-Ethylhexyloxy)butyl, 2-Methyl-6-isopropylphenyl, 2-Methyl-6-sec-butylphenyl, 2-Methyl-6-tert-butylphenyl, 2-Ethyl-6-isopropylphenyl, 2-Ethyl-6-sec-butylphenyl, 2-Ethyl-6-tert-butylphenyl, 2-Methylphenyl, 2,3-, 2,4-, 2,5- oder 2,6-Dimethylphenyl, 2,4,6-Trimethylphenyl, 2-Methyl-4-methoxyphenyl, 2,5-Dimethyl-4-methoxyphenyl, 2-Ethylphenyl, 2,6-Diethylphenyl, 2,6-Diethyl-4-methylphenyl, 2-Isopropylphenyl, 2,4-, 2,5- oder 2,6-Diisopropylphenyl, 2-n-Butylphenyl, 2-sec-Butylphenyl, 2-n-Pentylphenyl, 2-n-Hexylphenyl, 2,5-Dimethoxyphenyl, 2,5-Diethoxyphenyl, 2,4-Dimethoxyphenyl, 2-(2'-Methylpentyl)phenyl, 2-n-Octylphenyl, 2-Methoxyphenyl, 2-Ethoxyphenyl, 2,4-Diethoxyphenyl, 2,3-Dimethoxyphenyl oder 2,3-Diethoxyphenyl.

Reste R⁸ sind z.B. 2-, 3- oder 4-Fluorphenoxy, 2-, 3- oder 4-Chlorphenoxy, 2-, 3- oder 4-Bromphenoxy, 2-, 3- oder 4-tert-Butylphenoxy, 2-Isopropyl-4-methylphenoxy, 2,3- 2,4-, 2,5- oder 2,6-Dichlorphenoxy, 2,4,5- oder 2,4,6-Trichlorphenoxy, 2-, 3-oder 4-Methylphenoxy, 2,3-, 2,4-, 2,5-, 2,6- oder 3,5-Dimethylphenoxy, 2,5,6-Trimethylphenoxy, 2-Methyl-4-chlorphenoxy, 2-Methyl-5-chlorphenoxy, 2-Methyl-6-chlorphenoxy, 2-Ethylphenoxy, 2,6-Diethylphenoxy, 2,6-Diethyl-4-methylphenoxy, 2-Isopropylphenoxy, 3-Methyl-4-chlorphenyl, 4-Propylphenoxy, 4-Butylphenoxy, 2-, 3- oder 4-Methoxyphenoxy, 2-, 3- oder 4-Ethoxyphenoxy, 2-, 3-oder 4-Propoxyphenoxy, 2-, 3- oder 4-Isopropoxyphenoxy, 2-, 3-oder 4-Butoxyphenoxy oder 2,4-Dimethoxyphenoxy.

Die Polymerisation nimmt man in an sich bekannter Weise nach der Methodik der Suspensionspolymerisation vor (siehe Houben-Weyl, "Methoden der organischen Chemie, 4. Auflage, Bd XIV/1, Georg Thieme Verlag, Stuttgart 1961, Seiten 406 - 429). Dazu legt man üblicherweise die Wasser- und Monomerphase, enthaltend die Komponenten (A), gewünschtenfalls (B), (C) und (D), unter Zusatz von üblichen Dispergiermitteln vor. Hierzu eignen sich wasserlösliche oder wasserlöslich gemachte Stoffe wie Pektine, Gelatine, Methylcellulose oder andere Celluloseether. Ferner können Polyvinylalkohol, Alkalimetallsalze der Polyacrylsäure oder Polymethacrylsäure oder Alkalimetallsalze von Copolymerisaten aus Methylmethacrylat und Methacrylsäure verwendet werden. Darüberhinaus kann die Wasserphase gepuffert werden; üblich sind für den alkalischen Bereich Salze der Phosphorsäure, z.B. Mischungen von Natriumdihydrogenphosphat und Dinatriumhydrogenphosphat.

Für die Verbesserung der Verarbeitungseigenschaften können Thermostabilisatoren, z.B. sterisch gehinderte Phenole und Gleitmittel wie Stearinsäure zugegeben werden.

Um das Molekulargewicht der Polymerisate zu regeln, aus dem die Schale besteht, kann man bei der Polymerisation üblicherweise in Betracht kommende Molekulargewichtsregler oder Polymerkettenüberträger verwenden. Hierbei handelt es sich im allgemeinen um öllösliche Verbindungen. Geeignete Verbindungen dieser Art sind beispielsweise Mercaptane, wie Mercaptoethanol, Mercaptopropanol, Mercaptobutanole, n-Dodecylmercaptan, Mercaptobernsteinsäure, Mercaptopropionsäure, Mercaptoglycerin, Mercaptoessigsäure, Ester der Thioglykolsäure, wie Hexylthioglykolat, Mercaptoglykolsilane wie 3-Mercaptopropyltrimethoxysilan und 3-Mercaptopropyl-methyldimethoxysilan, Ether wie Dioxan, Tetrahydrofuran, Tetrahydrofurfurylalkohol, Essigsäuretetrahydrofurfurylester, Alkohole wie Isopropanol, n-Butanol und n-Decanol und aromatische Kohlenwasserstoffe wie Isopropylbenzol.

Als Regler verwendet man vorzugsweise Ester der Thioglykolsäure wie Ethylhexylthioglykolat und Hexylthioglykolat sowie Dodecylmercaptan. Die Mengen an Regler betragen, sofern Regler bei der Polymerisation eingesetzt werden, vorzugsweise 0,05 bis 1,5 Gew.-%, bezogen auf die Gesamtmenge an Monomeren.

Die Polymerisation erfolgt in der Regel in Gegenwart von Radikale bildenden Polymerisationsinitiatoren. Hierfür können alle üblichen Peroxo- und Azoverbindungen in den üblicherweise eingesetzten Mengen, z.B. von 0,1 bis 5 Gew.-%, bezogen auf das Gewicht der Monomeren, verwendet werden. Bevorzugt sind solche Polymerisationsinitiatoren, die in der Ölphase oder in den Monomeren löslich-sind. Beispiele hierfür sind t-Butylperoxyneodecanoat, t-Amylperoxypivalat, Dilauroylperoxid, t-Amylperoxy-2-ethylhexanoat, 2,2'-Azobis-(2,4-dimethyl)valeronitril, 2,2'-Azo-bis-(2-methyl-butyronitril), Dibenzoylperoxid, t-Butyl-per-2-ethylhexanoat, Di-t-butylhydroperoxid, 2,5-Dimethyl-2,5-di(t-butylperoxy)hexan und Cumolhydroperoxid. Bevorzugt eingesetzte Radikalstarter sind Di(3,5,5-trimethylhexanoyl)-peroxid, 4,4'-Azobisisobutyronitril, t-Butylperpivalat und Dimethyl-2,2'-azobisisobutyrat.

Die Polymerisationstemperatur liegt im allgemeinen im Bereich von 20 bis 150, bevorzugt von 40 bis 110°C.

Den Druck während der Polymerisation wählt man in der Regel im Bereich von 50 bis 2000, vorzugsweise von 60 bis 500 kPa.

Den pH-Wert des Reaktionsgemisches wählt man im allgemeinen im Bereich von 2 bis 12, vorzugsweise von 4 bis 10.

In einer bevorzugten Ausführungsform inertisiert man durch mehrmaliges Aufpressen eines Inertgases wie Stickstoff und jeweiliges Entspannen den Reaktionsansatz. Nach erneutem Aufpressen von Inertgas suspendiert man zunächst in der Kälte die Monomerphase durch Rühren in der Wasserphase und erhitzt dann auf die Polymerisationstemperatur. Nach einer Reaktionszeit im Bereich von 1 bis 20, vorzugsweise von 2 bis 10 h ist in der Regel die Polymerisation abgeschlossen.

Bei Verwendung von üblichen Rührertypen wie Impellerrührer, erhält man nach bisherigen Beobachtungen Polymerteilchen in Wasser mit einem Durchmesser im Bereich von 0,1 bis 3 mm.

Besonders vorteilhaft ist ein Microsuspensions-Verfahren, bei dem die Teilchengröße auf ein gewünschtes Maß eingestellt werden kann. Zudem werden nach bisherigen Erfahrungen einheitlichere Teilchenformen als sie durch Mahlen von groben Partikeln zu erzielen sind (siehe DE-A-39 33 903), erhalten. Die nach dem Microsuspensions-Verfahren hergestellten Polymerteilchen haben im allgemeinen einen Teilchendurchmesser im Bereich von 1 bis 100 µ (gemessen mit einem MALVERN Mastersizer durch Messung der Fraunhofer-Beugung). Man erzeugt die Polymerteilchen im allgemeinen mit Hilfe von stark scherenden Rühraggregaten wie Dispersionsrührer oder Ultra Ultra-Turrax®-Aggregate (Fa. IKA Labortechnik, Staufen), wobei man dann üblicherweise zur Stabilisierung der Monomertröpfchen während der Polymerisation größere Mengen an Dispergiermittel als üblich eingesetzt.

Nach der Polymerisation wird das Produkt üblicherweise abfiltriert und anschließend mit Wasser gewaschen und dann getrocknet. Die getrockneten erfindungsgemäßen Fluoreszenzpigmente weisen in der Regel eine Korngröße im Bereich von 0,1 bis 3, vorzugsweise von 0,5 bis 3 mm auf. Gewünschtenfalls kann man beispielsweise durch Mahlen kleinere Korngrößen erhalten.

In einer bevorzugten Ausführungsform, insbesondere wenn man nach dem Microsuspensions-Verfahren polymerisiert, verarbeitet man die erhaltene Suspension durch Sprühtrocknen oder Filtration und Trocknen in an sich bekannter Weise.

Die nach dem erfindungsgemäßen Verfahren erhältlichen Fluoreszenzpigmente kann man entweder als Dispersion oder nach (Sprüh-)Trocknung zu Druckfarben oder Dispersionen geben, um u.a. Druckerzeugnisse herzustellen. Es ist auch möglich, diese Fluoreszenzpigmente in Kunststoffe einzumischen, um beispielsweise eingefärbte Formkörper und Folien herzustellen wie Leuchtmarkierungen und fluoreszierende Kunststoffolien, beispielsweise zur Gewächshausbespannung, für Dekorationszwecke und als Werbeträger- oder Informationsträger.

Die beschriebenen Fluoreszenzpigmente weisen gegenüber dem Stand der Technik sowohl eine sehr gute Lichtechtheit als auch eine sehr gute Migrationsechtheit auf.

### Beispiele

### A. Lichtechtheit

Die Lichtechtheiten wurden nach DIN 16525 an Drucken ermittelt und mit Hilfe der blauen Wollskala (DIN 54003) bewertet.

### B. Migration

Die Migration der Farbpigmente wurde nach DIN 53775 ermittelt.

Bedruckte Folien aus Weich-PVC wurden mit einer weißen Folie aus Weich-PVC bedeckt und unter Belastung eine Woche bei 50°C gelagert. Das Wandern der Pigmente in die weiße Folie wurde beurteilt.

### C. Teilchengrößenbestimmung

Die Teilchengröße wurde mit einem MALVERN Mastersizer 3600 (s. auch Verfahrenstechnik 24 (1990) S. 36ff) bestimmt. Gemessen wurde die Fraunhofer-Beugung bei einer Wellenlänge von 633 nm.

Die Teilchengrößenverteilung wurde in einem Bereich von 1 bis 1000 µm bestimmt, wobei Wasser als Lösungsmittel eingesetzt wurde.

### Beispiel 1

In einen Reaktionskessel mit Impellerrührer wurde folgendes Gemisch gegeben:

| | |
|---|---|
| 82 kg | Wasser |
| 574 g | Accumer® 1530 (Polyacrylsäure, 25 gew.-%ig in Wasser (Rohm and Haas; Viskosität 135-175 mPa·s bei 25°C; pH 2,1-3,0) |
| 150 g | Na₂SO₄ |
| 48 kg | Methylmethacrylat |
| 240 g | Allylmethacrylat |
| 120 g | n-Dodecylmercaptan |
| 27,6 g | tert.-Butylperoxy-2-ethylhexanoat |
| 20 g | tert.-Butylperoxy-3,5,5-trimethylhexanoat |
| 21,1 g | 2,2-Bis(tert.-butylperoxy)butan |
| 1 kg | Fluoreszenzfarbstoff |

Der Kesselinhalt wurde unter intensivem Rühren mit Stickstoff inertisiert und anschließend stufenweise auf 120°C erwärmt. Die Nachpolymerisation erfolgte 1,5 h bei 110°C. Das Produkt wurde abfiltriert und mit Wasser gewaschen. Das getrocknete Produkt hatte eine Korngröße von ca. 0,5 bis 3 mm.

### Beispiel 2

In einen 4 l-Kessel mit Dispenserrührer (Durchmesser 5 cm) wurde folgendes Gemisch gegeben:

| | |
|---|---|
| 730 g | Wasser |
| 4,3 g | Na₂HPO₄ · 12 H₂O |
| 1,2 g | NaH₂PO₄ · 2 H₂O |
| 9 g | einer 1,6 gew.-%igen, wäßrigen Lösung eines Copolymeren aus 65 Gew.-% Methacrylsäure und 35 Gew.-% Methylmethacrylat (neutralisiert mit NaOH auf pH 7); (Röhm GmbH; Rohagit® S; 3800-5500 mPa·s bei 25 °C; 3 gew.-% neutralisierte wäßrige Lösung) |
| 200 g | einer 10 gew.-%igen Lösung von Polyvinylalkohol (Hoechst AG, Mowiol^{®} 40-88) (Verseifungsgrad 88 Mol-%, Molekulargewicht M_{w} von 127.000) in Wasser |
| 442 g | Methylmethacrylat |
| 13,5 g | Butandioldiacrylat |
| 0,6 g | Dilauroylperoxid |
| 0,15 g | t-Butylperneodecanoat |
| 9,1 g | Fluoreszenzfarbstoff |

Unter Rühren wurde bei einer Drehzahl von 3500 min⁻¹ in 40 Minuten auf 65°C aufgeheizt, in weiteren 30 Minuten auf 73°C erwärmt und unter andauerndem Rühren 50 Minuten bei 73°C gehalten. Dann wurde das reagierende Gemisch mit einer Schlauchpumpe in einen vorgeheizten, mit Ankerrührer versehenen (150 min⁻¹) 4 l-Kessel umgefüllt und dort weitere 2,5 h bei 73°C gehalten. Dann wurde innerhalb einer Stunde auf 85°C aufgeheizt und anschließend abgekühlt. Die erhaltene Dispersion hatte einen Feststoffgehalt von 34,5 Gew.-% und bestand aus mit Fluoreszenzfarbstoff gefärbten, vernetzten Teilchen mit einem Durchmesser im Bereich von 2 bis 8 µm.

### Beispiel 3

Wie Beispiel 2, jedoch mit 20,25 g Butandioldiacrylat.

### Beispiel4

Wie Beispiel 2, jedoch mit 27 g Butandioldiacrylat.

Die genannten Pigmente (in allen Beispielen und dem Versuch gemäß dem Stand der Technik wurde derselbe Farbstoff (Formel siehe unten eingesetzt) wurden auf ihre Migrationsechtheit und Lichtechtheit überprüft.

| | Migrationsechtheit | Lichtechtheit |
|---|---|---|
| Beispiel 1 | 2- | >6 |
| Beispiel 2 | 2+ | >6 |
| Beispiel 3 | 1 | >6 |
| Beispiel 4 | 1 | >6 |
| Stand der Technik*) | 3 | >6 |

| | | |
|---|---|---|
| *) Herstellung wie in DE 39 33 903 (Beispiel 2) beschrieben | | |

Eingesetzter Farbstoff:
(aus DE-A 39 33 903, Beispiel 2)

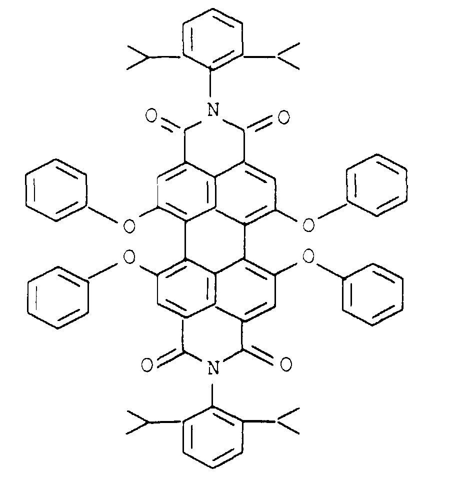

## Patentansprüche

1. Verfahren zur Herstellung von Fluoreszenzpigmenten, dadurch gekennzeichnet, daß man eine Mischung aus im wesentlichen
(A) 69,9 bis 99,8 Gew.-% eines C₁-C₈-Alkylesters der Acryl- oder Methacrylsäure,
(B) 0 bis 29,9 Gew.-% eines copolymerisierbaren, monoethylenisch ungesättigten Monomeren,
(C) 0,1 bis 30,0 Gew.-% eines copolymerisierbaren, polyfunktionellen, vernetzend wirkenden Monomers in Gegenwart von
(D) 0,1 bis 15,0 Gew.-%, bezogen auf die Summe von (A) und (B), eines unpolaren Fluoreszenzfarbstoffes aus der Cumarin- oder Perylenreihe
in Suspension polymerisiert.

## Claims

1. A process for the preparation of fluorescent pigments, wherein a mixture of essentially
(A) from 69.9 to 99.8% by weight of a C₁-C₈-alkyl ester of acrylic or methacrylic acid,
(B) from 0 to 29.9% by weight of a copolymerizable, monoethylenically unsaturated monomer,
(C) from 0.1 to 30.0% by weight of a copolymerizable, polyfunctional, crosslinking monomer
is polymerized in suspension in the presence of
(D) from 0.1 to 15.0% by weight, based on the sum of (A) and (B), of a nonpolar fluorescent dye from the coumarin or perylene series.

## Revendications

1. Procédé de préparation de pigments fluorescents, caractérisé en ce qu'on polymérise en suspension un mélange essentiellement
(A) de 69,9 à 99,8% en poids d'un ester alkylique en C₁-C₈ de l'acide acrylique ou méthacrylique,
(B) de 0 à 29,9% en poids d'un monomère monoéthyléniquement insaturé, copolymérisable,
(C) de 0,1 à 30,0% en poids d'un monomère à action de réticulation, polyfonctionnel, copolymérisable, en présence
(D) de 0,1 à 15,0% en poids, par rapport à la somme de (A) et (B), d'un colorant fluorescent non polaire de la série de la coumarine ou du pérylène.
